# EUROPEAN PATENT SPECIFICATION

(11) **EP 2 610 122 B1**
(45) Date of publication and mention of the grant of the patent: **30.07.2014**
(21) Application number: 11010246.4
(22) Date of filing: 28.12.2011
(51) Int. Cl.: B60T 7/20, B60T 17/04, B60D 1/64

(54) **Coupling head**
Kopplungskopf
Tête de couplage

(43) Date of publication of application: 03.07.2013
(73) Proprietor: KNORR-BREMSE Systeme für Nutzfahrzeuge GmbH, 80809 München (DE)
(72) Inventor: Sovàgò, Szabolcs, 6000 Kecskemét (HU); Majlàth, Attila, 6000 Kecskemét (HU); Pellecuer, Francois, 80637 München (DE); Farkas, Gàbor, 6000 Kecskemét (HU)
(74) Representative: Mattusch, Gundula

(56) References cited:
- WO-A1-2011/120961

## Description

The present invention pertains to a coupling head for a trailer of and a trailer for a vehicle with such a coupling head.

Trailers of trucks are usually supplied with pressurized air for their brake system by the brake system of the truck. Usually, pressurized air for controlling the trailer's brake and pressurized air for actuating the brake are provided via separate coupling heads. To ensure that the trailer cannot be moved without its brake being correctly connected to the truck's brake, the coupling heads are usually adapted to ensure that a line for supplying air to the brake and a line for supplying pressurized air for controlling the brake are connected to an exhaust, such that they are vented to the atmosphere. By venting the supply circuit and the control circuit of the trailer, it is avoided that a brake like a parking brake is accidentally actuated or loosened when the brake system of the trailer and the truck are not yet completely coupled, thus providing for example a roll protection function.

An objective of the present invention is to provide a coupling head for a trailer connected or connectable to a pulling vehicle allowing an easy connection of the brake system of the trailer to the brake system of the pulling vehicle and ensuring a high level of security for the trailer, in particular roll protection function by exhausting a control line and a supply line in an uncoupled state. A state of the art air coupling is described in WO 2011/120961 A1.

In the context of this description and application, a trailer may be an unpowered vehicle pulled by a powered vehicle, in particular, by a truck or tractor. A trailer may have its own brake system. The brake system of a trailer may be a pneumatic brake system. It may be considered that the brake system of a trailer is connected or connectable to a pneumatic brake system of a vehicle arranged to pull the trailer. The pressurized air for the pneumatic brake system of the trailer may be provided by the pneumatic brake system of the pulling vehicle. It may be considered that the trailer comprises a supply line via which pressurized air for actuating the brakes of the trailer and/or filling an air supply of the trailer may be supplied to the brake system of the trailer. Air provided to and/or via the supply line may be considered to be supply air and to have a supply pressure. The supply line and pneumatic elements involved in providing the supply air and/or supply pressure may be seen as part of a supply circuit of the trailer. The supply line may be arranged on and/or fixed to the trailer. A control line adapted to provide a control pressure or pilot pressure to control the brake system of the trailer may be provided. The control line may be arranged on and/or fixed to the trailer. Air provided to and/or via the control line may be considered to be control air and to have a control pressure. The control line and pneumatic elements involved in providing the control air and/or control pressure may be seen as part of a control circuit. Control circuit and supply circuit of the trailer may be sealed against each other. It may be considered that control line and supply line are part of the trailer and/or the brake system of the trailer. A control line may be connected to a coupling head. The coupling head may be connected or connectable to a control coupling of the pulling vehicle to enable the brake system of the pulling vehicle to provide a control pressure. The supply line may be connected to the coupling head. It may be considered that the trailer comprises a supply coupling head which may be connected to a corresponding supply coupling of the pulling vehicle to enable the brake system of the pulling vehicle to provide a supply pressure. There may be arranged a supply inlet line providing a supply pressure from the supply coupling head to the coupling head, in particular, to a supply inlet of the coupling head. The supply inlet line may be connected to a supply coupling head of the trailer, which in turn may be connected to a supply coupling of the pulling vehicle. Generally, a control pressure may refer to a pressure provided to control the brake of the trailer. Analogously, a supply pressure may refer to a pressure provided to actuate the brakes of the brake system of the trailer according to the control pressure and/or to fill an air supply of the trailer. A control pressure may be provided to a brake valve device of the brake system of the trailer. Analogously, a supply pressure may be provided to a brake valve device of the brake system of the trailer. An uncoupled state of the coupling head may be considered to be a state in which the coupling head is not coupled to the control coupling of a pulling vehicle. In particular, in an uncoupled state there is no fluid communication between the control coupling of the pulling vehicle and the coupling head to provide a control pressure. However, it may be feasible that in an uncoupled state the coupling head is connected to a supply coupling head and/or a supply line over which a supply pressure is provided. Such an uncoupled state can e.g. occur during connecting the trailer to a pulling vehicle. The supply line of the trailer should be exhausted in the uncoupled state to ensure that the trailer cannot roll away by, e.g., due to accidently providing a supply pressure to a parking brake connected to a supply line. However, an uncoupled state may also refer to a state in which neither a control pressure nor a supply pressure may be provided by the pulling vehicle to the trailer, e.g. due to neither the coupling head nor the supply coupling head being connected to the corresponding couplings of the pulling vehicle. A coupled state generally may refer to a state in which a supply pressure is provided to the coupling head, e.g., via a supply inlet line and/or a supply coupling head, and in which a control pressure may be supplied to the coupling head. Thus, the coupled state refers to a state in which the coupling head is coupled to a control coupling of the pulling vehicle and in which a supply coupling is coupled to the corresponding supply coupling head. An inlet or outlet of the coupling head via which fluid may flow may generally be considered to be a port. A port may serve both as an inlet or outlet, depending on the state of the coupling head. It may be generally considered that a port comprises or is connected to further elements in fluid communication with the port, e.g. an additional inlet and/or outlet, a fluid line, a filter, etc. In particular, an outlet may comprise one or more lines and a filter. A port and/or a space of the coupling head may be considered to be in fluid communication with another element, e.g., a port and/or space, if fluid may flow between them. Two elements in fluid communication with each other may be considered to be connected to each other. If fluid may flow, fluid communication may be considered to be established. If no fluid may flow between such elements, there is no fluid communication established between these elements. It may be considered that an established fluid communication may be closed and/or interrupted, e.g., by closing a valve seat, moving a movable element, or actuating a valve. Correspondingly, a closed and/or interrupted fluid communication may be opened or established by opening a connection so that fluid may flow. Opening a valve seat may refer to moving a blocking element abutting the valve seat to open a passage or connection between the blocking element and the valve seat. Closing a valve seat may analogously refer to moving a blocking element to abut a valve seat to close a passage or connection between the valve seat and the blocking element. A control pressure may be a pilot pressure to pilot control valves of the trailer. An exhaust may be considered to be a port which may be brought into or is in fluid communication with the atmosphere. It may be generally considered that an exhaust comprises a silencer to dampen noise provided by the exhaust. An exhaust may comprise or be connected to an exhaust valve, e.g. a valve operable to establish and/or close fluid communication with the atmosphere. Exhausting a line and/or port may be considered to mean establishing fluid communication between the line and/or port and the atmosphere, e.g., via an exhaust. A coupling head may generally be connected or connectable to the control line and/or the supply line to enable fluid communication via the coupling head. It may be considered to provide a supply inlet line to connect the supply inlet of a coupling head with a supply outlet of a supply coupling head. A seal may generally be any kind of element capable of providing a fluid-tight sealing between two elements. In particular, a seal may be embodied as an O-ring. A seal may be considered to be adapted to prevent fluid communication between elements sealed. It can be generally assumed that in a coupled state, a mechanical connection between a control coupling of the truck and the coupling head is provided such that a control pressure provided by the control coupling can be guided to the coupling head. It can also be generally assumed that the coupling head is fixed or fixable to the trailer by suitable fixing means, e.g., screws. A piston may generally be arranged to or be operable to establish and/or close fluid communication. For this purpose, a piston may be movable to close a fluid communication, e.g., by abutting at a valve seat, and/or to establish a fluid communication by opening a connection closed by a valve seat, e.g. by lifting a blocking element from a valve seat. A control piston may be considered to be a piston at least partially accommodated in a control bore and/or defining a control inlet space. A supply piston may be considered to be at least partially accommodated in and/or defining a supply outlet space. A single piston may be adapted to provide functions of a control piston and a supply piston. It may be envisaged that a supply pressure may be applied to move a supply piston. Analogously, a control pressure may be applied to move a control piston. However, it may be assumed that a control piston is movable by a mechanical force applied when coupling or uncoupling the coupling head to a control coupling. Generally, it may be considered that the fluid communication conditions of the coupling head change when changing from coupled state to uncoupled state and vice versa, but that the conditions remain stable while a given state is maintained. This however does not exclude differing fluid flow conditions inside the coupling head, e.g., due to differing pressures supplied by a pulling vehicle.

The present invention describes a coupling head for a trailer, the coupling head comprising a control inlet connected or connectable to be in fluid communication with a control line of the trailer, a supply inlet connected or connectable to a supply inlet line providing a supply pressure and a supply outlet connected or connectable to be in fluid communication with a supply line of the trailer. The coupling head is arranged such that in an uncoupled state of the coupling head, the control line is exhausted via the control inlet and the supply line is exhausted via a supply exhaust, the supply exhaust being sealed against the control inlet. Correspondingly, supply line and control line are exhausted separately. Therefore, the risks of leakage between the control circuit and the supply limit are minimized. Also, the effective cross-sections for exhausting the control line and the supply line can be small. This allows the use of relatively small coupling forces, improving the coupling process of the control coupling to the coupling head. It may be considered that sealing the control inlet against the supply exhaust means that a fluid communication between the control inlet and the supply exhaust is interrupted or not possible due to a permanent seal or permanent seals arranged between the control inlet and the supply exhaust. A permanent seal in this context may be a seal which may not be moved to provide fluid communication between supply exhaust and control inlet in either the uncoupled state or the coupled state. It may be feasible that the supply inlet is connected or connectable to a supply inlet space. The supply outlet may be connected or connectable to a supply outlet space. The supply outlet space may be defined in a bore accommodating at least partially a piston. It may be considered that the supply outlet space at least partially surrounds the piston and/or is defined at least partially by a wall of a bore and a wall of the piston. In the uncoupled state, the supply outlet space may be in fluid communication with the supply exhaust, e.g., via a piston space. It may be envisioned that in the uncoupled state, the supply outlet space is sealed off from the supply inlet space, e.g., by closing a valve seat. In the coupled state, the supply outlet may be connected to the supply inlet, e.g., by opening a valve seat. It may be considered that in the coupled state, fluid communication between supply exhaust and supply outlet space is closed and/or interrupted. In the coupled state, the supply outlet space may be an annular space and/or annularly surround a piston. In this state, the supply outlet space may be limited on its top by a blocking element, which may abut a valve seat of the piston. The coupling head generally may comprise a housing in which one or more bores may be formed. A bore may accommodate a pressure space, for example a control inlet space, a supply inlet space and/or a supply outlet space. A pressure space may be adapted to be provided with pressurized air. In a bore there may be accommodated one or more pistons and/or one or more springs and/or one or more seals. It may be envisioned to arrange a control bore to accommodate a control piston and to form a control inlet space. A separate supply bore may be arranged to accommodate a supply inlet space and/or a supply outlet space and/or one or more supply pistons. A bore, one or more pistons and corresponding seals may be arranged to define a pressure space. The volume of such a pressure space may be variable depending on the movement of the piston.

It may be considered that the coupling head comprises a piston operable to interrupt fluid communication between the supply exhaust and the supply line in the coupled state of the coupling head. Thus, it is ensured that supply pressure does not leave the brake system of the trailer via the supply exhaust in the coupled state. The piston may be movable to interrupt the fluid communication when coupling the coupling head to the control coupling. The piston may be moved mechanically due to the movement involved in coupling the control coupling to the coupling head. The piston may be adapted to interrupt fluid communication between the supply exhaust and the supply line by interrupting fluid communication between the supply exhaust and any structure or space in fluid communication with the supply line arranged between supply exhaust and supply line, e.g., the supply outlet or a supply outlet space.

The piston may comprise a piston space connected or connectable to be in fluid communication with the supply exhaust. The piston space may be formed inside a piston, in particular inside a control piston, which may be at least partly accommodated in a control bore. Inside the piston space there may be accommodated at least partly a spring biasing the piston. The piston may be open on one end to provide a port and comprise a further opening in one of its side walls to form a connection port establishing fluid communication with the supply exhaust. This allows a very compact construction of the coupling head.

According to one variant, the piston may be operable to open a valve seat to establish fluid communication between the supply inlet and the supply line. In particular, the piston may be operable to establish fluid communication between a supply inlet space and a supply outlet space. The piston may be operable to open the valve seat in a coupled state and/or when establishing the coupled state. In particular, the piston may be operable to close fluid communication between the supply exhaust and the supply line and/or to establish fluid communication between supply line and supply inlet with one movement when changing to the coupled state.

Alternatively or additionally, the piston may comprise a valve seat operable to seal a piston space of the piston and/or the supply exhaust against the supply inlet. The valve seat may be operable to seal against a supply inlet space and/or a supply outlet space, in particular in a coupled state of the coupling head. The valve seat may be arranged to be brought into abutment with a blocking element to close the valve seat, interrupting fluid communication. In particular, the piston may be arranged to bring its valve seat, which may be called piston valve seat, into abutment with a blocking element, and in the same movement to lift the blocking element from a further valve seat, establishing fluid communication via the further valve seat.

The coupling head may comprise a first seal and a second seal, the first and second seals being adapted to seal the control inlet against the supply outlet. In particular, the first and second seals may be adapted to seal a control inlet space against a supply outlet space. In between the first seal and the second seal, there may be arranged the supply exhaust and/or an exhaust space. The supply exhaust and/or exhaust space may be sealed against the supply outlet and/or supply outlet space and/or the control inlet or control inlet space by the first and second seals, respectively. A piston may be movable at least partially inside the exhaust space. The exhaust space may be connected or connectable to an exhaust, via which it may be exhausted and/or the pressure inside the exhaust space may be equalized. The exhaust may be sealed or sealable against the supply exhaust and/or the control inlet. It may be considered that the first seal and/or the second seal are embodied as O-ring. The first seal and/or the second seal may encompass and/or surround a piston to seal it, e.g. against the walls of a bore in which the piston is accommodated. The first and/or second seals may be fixed to a piston. The first and the second seals may be arranged to open or close fluid communication of a piston space with a given port depending on the position of the piston. The first and second seals may be fixed to a housing of the coupling head, e.g., to a wall of a bore. It may be feasible to arrange the first seal and the second seal to have a fixed distance to each other. The exhaust space may be an equalization exhaust space, which may be adapted to allow pressure equalization, e.g., due to movement of a piston. An equalization exhaust space may be connected or connectable to atmosphere via an equalization exhaust. The equalization exhaust may be the supply exhaust. It may be considered that an equalization exhaust space is connected or connectable to an equalization exhaust, which may be sealed against the control inlet and/or the supply exhaust. In particular, an equalization exhaust may be sealed against the supply exhaust by the first seal and/or sealed against the control inlet by the second seal. It may be envisioned that an equalization port providing fluid communication between the equalization exhaust space and a supply exhaust and/or a piston space connected to a supply exhaust is provided. An equalization port may be provided inside a wall of a piston. The piston may be arranged to be movable at least partly inside the equalization exhaust space. The equalization may be arranged in particular in a top wall of the piston. The piston and/or its top wall may at least partly define the equalization exhaust space. The equalization port may be formed by a through-hole in the piston wall. The piston may be a hollowed-out piston, comprising an equalization port in one of its walls.

In particular, the supply exhaust may be sealed or sealable against the supply outlet by the first seal and sealed against the control inlet by the second seal. Therefore, two seals are provided, lowering the risk of leakage between control circuit and supply circuit.

Generally, the first seal may be adapted to seal the supply exhaust against a supply inlet space in fluid communication with the supply inlet and/or a supply outlet space in fluid communication with the supply outlet. In particular, the first seal may be adapted to seal the supply exhaust against an annular supply outlet space, which may be annularly surrounded by the supply inlet space. This enables a compact arrangement of the coupling head.

It may be considered that the supply inlet is connected or connectable to a supply coupling head of the trailer. Via the supply coupling head, a supply pressure can be provided to the coupling head. As the coupling head is arranged to ensure exhausting the control line and the supply line in the uncoupled state, the supply coupling head does not have to be provided with separate blocking elements or valves.

The present invention also pertains to a trailer for a vehicle with a coupling head as described herein.

Further details, aspects and embodiments of the invention will be described, by way of example only, with reference to the drawings. Elements in the figures are illustrated for simplicity and clarity and have not necessarily been drawn to scale.
- Figure 1: shows a schematic view of a coupling head for a trailer.
- Figure 2: shows a schematic view of a variant of a coupling head for a trailer.
- Figures 3a to 3c: show different schematic views of a further variant of a coupling head for a trailer in an uncoupled state.
- Figure 4: shows the fluid communication situation in the variant of Figures 3a to 3c.
- Figures 5a and 5b: show the coupling head of Figures 3a-c and 4 in a coupled state.
- Figures 6a and 6b: show a variant of the coupling head shown in figures 3a to 5b.
Because the illustrated embodiments of the present invention may for the most part, be implemented using components known to those skilled in the art, details will not be explained in any greater extent than that considered necessary as illustrated above, for the understanding and appreciation of the underlying concepts of the present invention and in order not to obfuscate or distract from the teachings of the present invention.

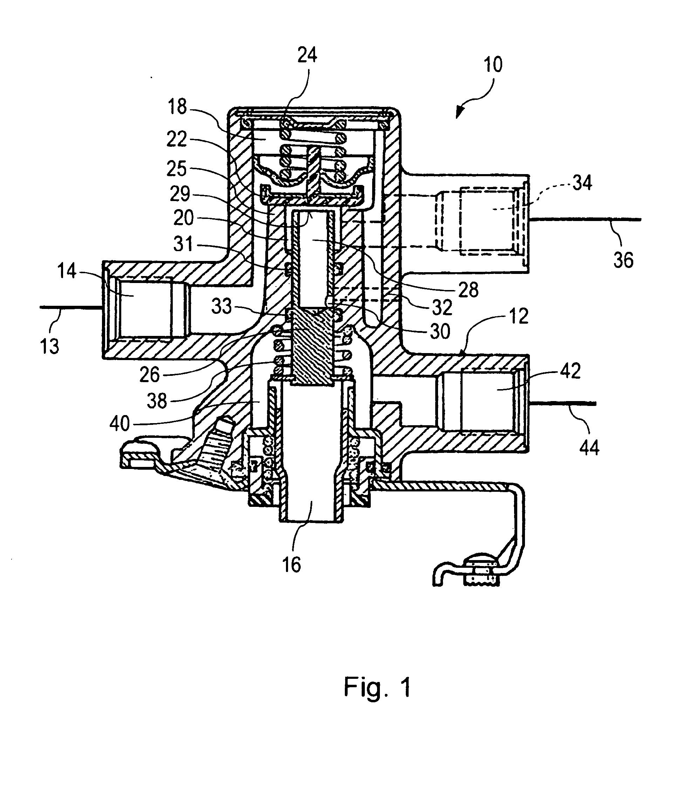

Figure 1 generally shows a coupling head 10 for a trailer. Coupling head 10 is arranged to be connected to a corresponding control coupling of a pulling vehicle, for example a truck. The pulling vehicle provides pressurized air for controlling and supplying a brake system of the trailer. Coupling head 10 comprises a housing 12 with a supply inlet 14 and a control inlet 16. Supply inlet 14 is connected or connectable via a supply inlet line 13 to a supply coupling head the trailer, which may be connected to a corresponding supply coupling of the pulling vehicle. Control inlet 16 may be connected to a corresponding control coupling of the vehicle. Supply inlet 14 is in fluid communication with a supply inlet space 18 inside housing 12. A supply outlet space 20 is provided which may be brought into fluid communication with supply inlet space 18 by activating a blocking element 22. Blocking element 22 is pre-biased by a spring 24 to press blocking element 22 against a valve seat 25 to interrupt fluid communication between supply inlet space 18 and supply outlet space 20. A piston 26 is at least partially arranged in supply outlet space 20. Piston 26 comprises a piston space 28 arranged inside the piston 26 and a valve seat 29. Piston 26 may be moved into the direction of the blocking element 22 to close valve seat 29 and to open valve seat 25 by pushing blocking element 22 against the biasing force of a spring 24. There may be provided an amount of play between blocking element 22 and spring 24, so that the biasing force of spring 24 only acts after the piston 26 has overcome the play. Such movement may be caused when coupling a control coupling with coupling head 10, in which case the piston 26 is mechanically moved into the direction of blocking element 22. The piston space 28 is open at its end facing blocking element 22 so that it may be in fluid communication with supply outlet space 20. Fluid communication between supply outlet space 20 and piston space 28 may be blocked by moving piston 26 such that piston valve seat 29 abuts blocking element 22. Piston space 28 is in fluid communication with a supply exhaust 32 via a connection port 30 arranged in a wall of piston 26 surrounding piston space 28. A first seal 31 and a second seal 33 surrounding piston 26 are provided in and fixed to housing 12. First seal 31 and second seal 33 seal off connection port 30 and supply exhaust 32 in both moving directions of piston 26. In particular, first seal 31 and second seal 33 seal off connection port 30 against supply outlet space 20 and control inlet space 40. Supply exhaust 32 may be connected to an exhaust valve and/or a silencer and/or the atmosphere. There is provided a supply outlet 34, which is in fluid communication with supply outlet space 20. A supply line 36 is connected to supply outlet 34. Via supply line 36, pressurized air at a supply pressure may be provided to a brake system of the trailer, in particular, a brake valve device. Control inlet 16 is in fluid communication with a control inlet space 40 arranged in housing 12. A lower part of the piston 26 is at least partially arranged in control inlet space 40. Control inlet space 40 is in fluid communication with a control outlet 42, to which a control line 44 is connected. Via control line 44, a control pressure for controlling the brake system of the trailer may be provided, e.g., as a pilot pressure to a brake valve device. A control spring 38 is arranged in control inlet space 40. Control spring 38 is supported in housing 12 and a spring supporting flange of piston 26 to bias piston 26 in a direction away from blocking element 22. Control inlet 16 is arranged such that in a coupled state, piston 26 is moved against the spring force of the control spring 38 to be moved into the direction of blocking element 22. It should be noted that piston space 28 is not in fluid communication with control inlet space 40 and/or control inlet 16. In particular, piston 26 is not completely hollowed out, such that there is no fluid communication between piston space 28 and control inlet space 40. Piston 26 is arranged such that the connection port 30 may not be moved beyond either of first seal 31 and second seal 33. As first seal 31 is associated with the supply circuit and second seal 33 is associated to the control circuit, they may be called supply seal and control seal, respectively.

In an uncoupled stated, e.g., if a supply coupling head is connected to a corresponding supply coupling of a pulling vehicle, but the coupling head 10 is not connected to a corresponding control coupling, supply pressure may by provided in supply inlet space 18 via supply inlet 14. As the blocking element 22 abuts valve seat 25, there is no fluid communication between supply inlet space 18 and supply outlet space 20. In this uncoupled state, supply outlet space 20 is in fluid communication with supply outlet 34 and also in fluid communication with supply exhaust 32 via piston space 28 and connection port 30. Thus, supply line 36 is exhausted to the atmosphere via supply exhaust 32. In this uncoupled state, control outlet 42 is in fluid communication with control inlet space 40 and thus exhausted via control inlet 16. The supply line of the trailer and the control line of the trailer, hence, are exhausted separately. There is no fluid communication between the supply circuit/supply line and the control circuit/control line. For each exhaust path, only a relatively small cross-section for fluid flows has to be provided. As the exhaust path for the control line also defines the size and forces to be used for coupling the coupling head 10 to a control coupling, the corresponding sizes and forces may be reduced as well. In a coupled stated, pressurized air may be provided via control inlet 16 to control line 44. In this coupled stated, piston 26 is moved against the biasing force of control spring 38 and spring 24 such that piston valve seat 29 is brought into sealing contact with blocking element 22, lifting blocking element 22 from valve seat 25. Thus, supply inlet space 18 and supply outlet space 20 are brought into fluid communication, such that pressurized air may flow from supply inlet 14 to supply outlet 34 via supply inlet space 18 and supply outlet space 20. In the coupled state, piston space 28 is still in fluid communication with supply exhaust 32 via connection port 30. However the fluid communication between piston space 28 and supply outlet space 20 is interrupted. Thus, at no time is the supply line in fluid communication with the control line.

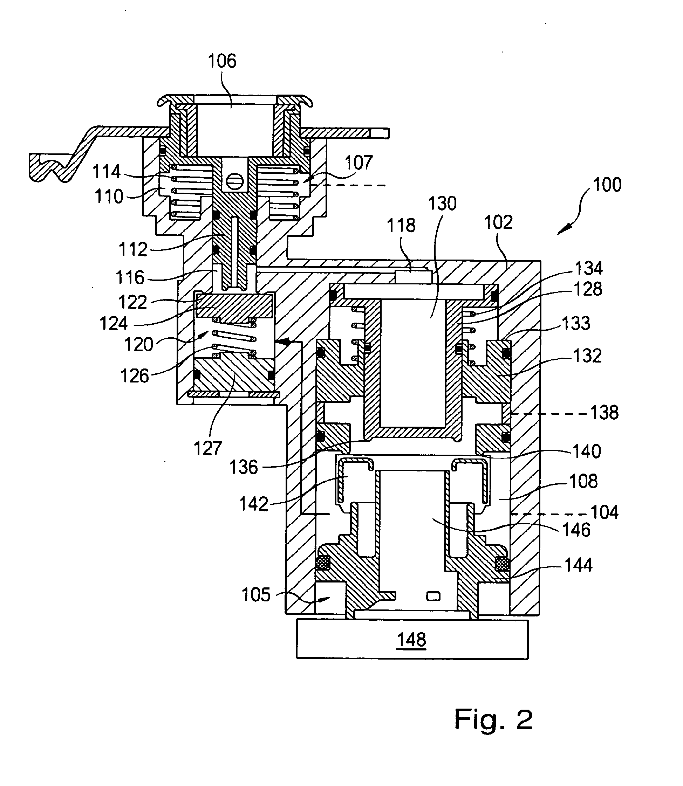

Figure 2 shows a variant of a coupling head 100. Coupling head 100 may comprise a housing 102 with a supply inlet 104 in fluid communication with a supply inlet space 108. Coupling head 100 may further comprise a control inlet 106. Control inlet 106 is in fluid communication with a control inlet space 110, which may be in fluid communication with a filter and a control line of a trailer (indicated by dashed line). Housing 102 comprises a control bore 107 in which a control piston 112 is accommodated. Inside control inlet space 110, a control spring 114 biasing control piston 112 is provided. Control piston 112 is partially hollowed out, forming a control piston space. Via a piston space inlet this control piston space may be in fluid communication with a bore space 116, which in turn is in fluid communication with a bore line 118. A control bore space 120 is provided. A valve seat 122 formed in the control bore 107 and a movable blocking element 124 arranged in control bore space 120 may interact to interrupt fluid communication between bore space 116 and control bore space 120. If the blocking element 124 abuts the valve seat 122, fluid communication between bore space 116 and control bore space 120 is interrupted, whereas moving blocking element 124 away from valve seat 122 establishes the corresponding fluid communication. Blocking element 124 is biased into the direction of valve seat 122 by a blocking spring 126. Blocking spring 126 is supported on a holding element 127 fixed to the housing 102 inside control bore 107. Control bore space 120 is in fluid communication with supply inlet space 108, such that air may flow from supply inlet space 108 into control bore space 120 as shown by the arrow in Figure 2. Housing 102 also comprises a supply bore 105, in which a supply piston 128 is provided. Supply piston 128 is partially hollowed out, providing a supply piston space 130 which is in fluid communication with bore line 118. Surrounding supply piston 128, an intermediate element 132 is provided. Intermediate element 132 abuts a stop 133 formed in the housing and may be fixed inside supply bore 105 inside housing 102. Supply piston 128 and intermediate element 132 are biased against each other via a supply spring 134. Inside intermediate element 132, there is provided an intermediate space 136 which is in fluid communication with a supply outlet 138, which may be in fluid communication with a supply line. The intermediate space 136 may be seen as a supply outlet space. Intermediate space 136 is sealed against supply piston space 130 and a control space provided in supply bore 105 between supply piston 128 and intermediate element 132. Supply spring 134 is arranged in this control space. A supply valve seat 140 is provided on intermediate element 132. A supply blocking element 142 is arranged movable on a holding element 144 arranged in supply bore 105. Holding element 144 comprises a spring biasing supply blocking element 142 against supply valve seat 140. Holding element 144 may be fixed to the housing 102 inside supply bore 105. Inside an annular wall of holding element 144, an exhaust space 146 in fluid connection to a supply exhaust comprising an exhaust valve with silencer 148 is arranged. The control space between supply piston 128 and intermediate element 132 may be in fluid communication with exhaust space 146 and/or exhaust valve 148. It may be considered that a fluid communication of bore space 116 with the control space and/or the exhaust space 146 and/or the exhaust valve 148 is provided. This fluid communication may be interrupted when the control piston 112 is moved into its coupled position.

In the uncoupled state shown in Figure 2, supply blocking element 142 is in sealing contact with supply valve seat 140 arranged on the intermediate element 132. Thus, fluid communication between intermediate space 136 and supply inlet space 108 is interrupted. Air from supply inlet 104 may enter supply unit space 108 and, consequently, control bore space 120. However, in the uncoupled state, blocking element 124 blocks valve seat 122, so that no fluid communication between control bore space 120 and bore space 116 is possible. Exhaust space 146 is in fluid communication with intermediate space 136, so that supply outlet 138 and the supply line are exhausted via exhaust space 148. Control piston 112 is biased away from blocking element 124 by control spring 114. Via control inlet space 110 and control inlet 106, the control line is exhausted to the atmosphere. Hence, the control line and supply line are exhausted via separate exhausts. In the control space between supply piston 128 and intermediate element 132, bore space 116 and bore line 118 as well as supply piston space 130, an equalization pressure equivalent to the pressure in exhaust space 146 applies. In the coupled state, control piston 112 is moved mechanically to lift blocking element 124 from valve seat 122, allowing fluid communication between bore space 116 and control bore space 120. At the same time, the fluid connection providing bore space 116 with the equalization pressure is interrupted with the movement of control piston 112 and corresponding movement of the control piston space. Therefore, supply air is provided via supply inlet space 108, control bore space 120, bore space 116 and bore line 118 into supply piston space 130 of supply piston 128. Accordingly, supply piston 128 is moved by the pressure difference between the pressure in exhaust space 146 and the supply pressure, lifting supply blocking element 142 from supply valve seat 140. This provides fluid communication between supply inlet space 108 and intermediate space 136 as well as supply outlet 138. Further, supply piston 128 itself is brought into abutment with supply blocking element 142 to interrupt fluid communication between intermediate space 136 and exhaust space 146. Accordingly, supply air may be provided to a supply line via supply inlet space 108 and control air may be provided to a control line via control inlet space 110. Providing an equalization pressure connected to atmosphere allows avoiding over-pressures or under-pressures in the spaces and lines provided with the equalization pressure due to the movements of control piston 112 and the supply piston 128. The variant of figure 2 is particularly suitable for a coupling head manufactured from a monoblock.

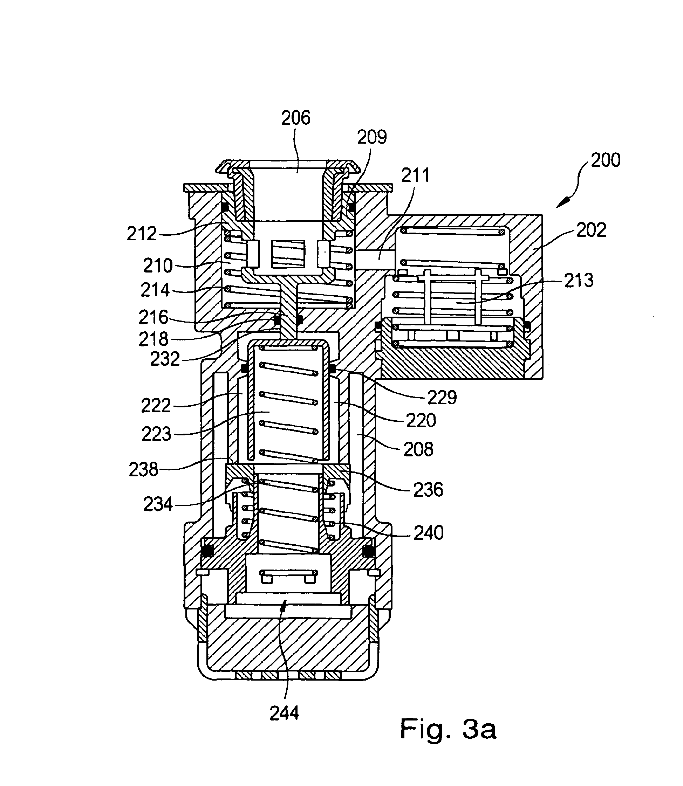

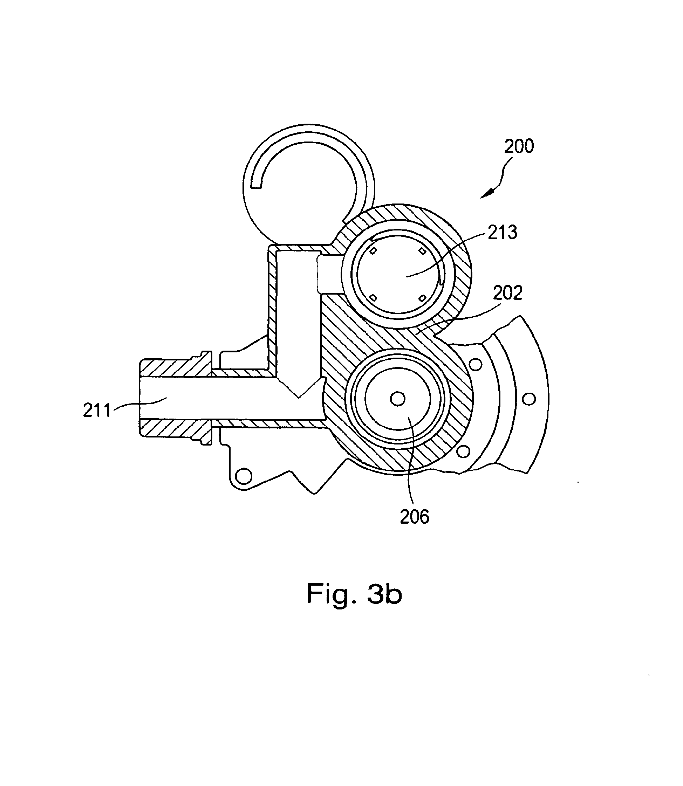

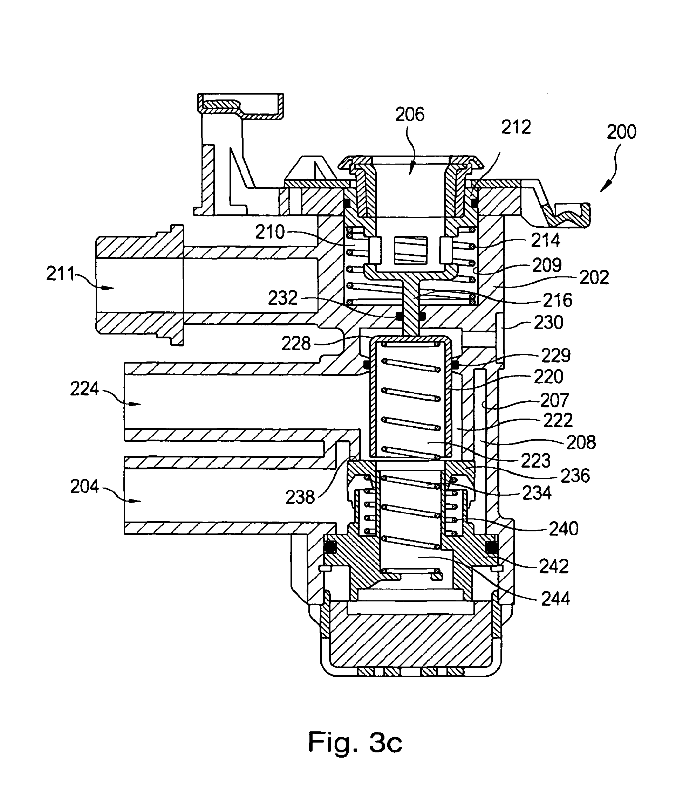

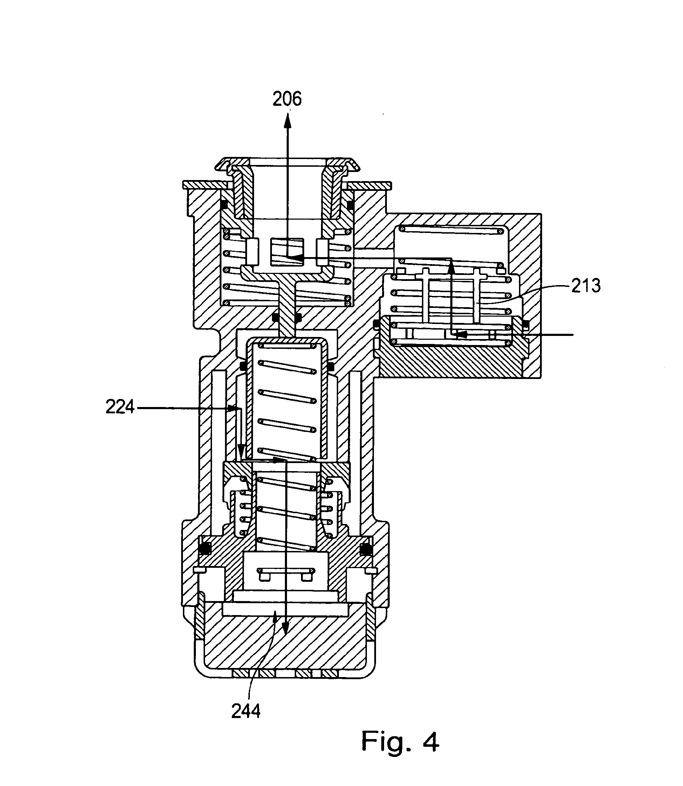

Figures 3a, 3b and 3c show different views of a further variant of a coupling head 200 with a housing 202. In housing 202, a supply inlet 204 and a control inlet 206 are provided. A control line and a supply line may be provided analogously to the variants shown in Figures 1 and 2. A supply bore 207 is provided inside housing 202. A supply inlet space 208 is provided inside supply bore 207. Supply inlet space 208 is in fluid communication with supply inlet 204. A control bore 209 is also provided, in which a control inlet space 210 in fluid communication with control inlet 206 is arranged. There is provided a control outlet 211 in fluid communication with control inlet space 210. Inside control bore 209, a control piston 212 is provided which is biased into the direction of control inlet 206 by a control spring 214. Control piston 212 comprises a piston rod 216, which is guided through a piston rod bore 218 into supply bore 207. A supply piston 220 abuts piston rod 216 and may be connected to piston rod 216. Via piston rod 216, movement of control piston 212 and supply piston 220 may be coupled. Inside supply bore 205, a supply outlet space 222 is provided, which is in fluid communication with supply outlet 224. Supply outlet space 222 may be an essentially annular space surrounded by supply inlet space 208, which also may be essentially annular. A supply seal 229 surrounding supply piston 220 seals supply outlet space 222 against an equalization exhaust space 228, which is connected to an equalization exhaust valve 230, via which pressure differences inside equalization exhaust space 228 caused by movement of supply piston 220 may be equalized. Equalization exhaust space 228 is sealed off from control inlet space 210 via control seal 232. Control inlet space 210 and supply outlet space 222 are also sealed against each other via control seal 232 and supply seal 229. Supply piston 220 may be moved against the force of supply spring 234 into the direction of a blocking element 236. Blocking element 236 is biased against a valve seat 238 by blocking spring 240. When blocking element 236 abuts valve seat 238, supply inlet space 208 is sealed off from supply outlet space 222, so that there is no fluid communication between supply outlet space 222 and supply inlet space 208. Blocking spring 240 is supported against a holding element 242, which is held in a fixed position within supply bore 207. Inside holding element 242, there is provided a supply exhaust 244, which may be connected or connectable to an exhaust valve and/or a silencer. As shown in Figures 3a and 3b, control outlet 211 in this variant is in fluid communication with a filter unit 213 adapted to filter pressured air supplied to the control line of the brake system of the trailer. In the uncoupled state shown in Figures 3a to 3c, air provided via a supply coupling is guided to supply inlet space 208. Blocking element 236 abuts valve seat 238 to block fluid communication between supply inlet space 208 and supply outlet space 224. As control piston 212 and consequentially supply piston 220 are biased by springs 214 and 234 to open a fluid communication between supply piston space 223 and supply outlet space 222, fluid communication between supply outlet space 222 and supply exhaust 244 is provided. Thus, supply outlet space 222 and supply outlet 224 are exhausted via supply exhaust 244. Pressure inside equalization exhaust piston space 228 may be equalized via exhaust 230. Control outlet 211 is connected to atmosphere via control inlet space 210 and control inlet 206. The fluid communication conditions for exhausting the control line and the supply line are shown with arrows in Figure 4. As can be seen, the supply line circuit and the control line circuit are completely separate from each other.

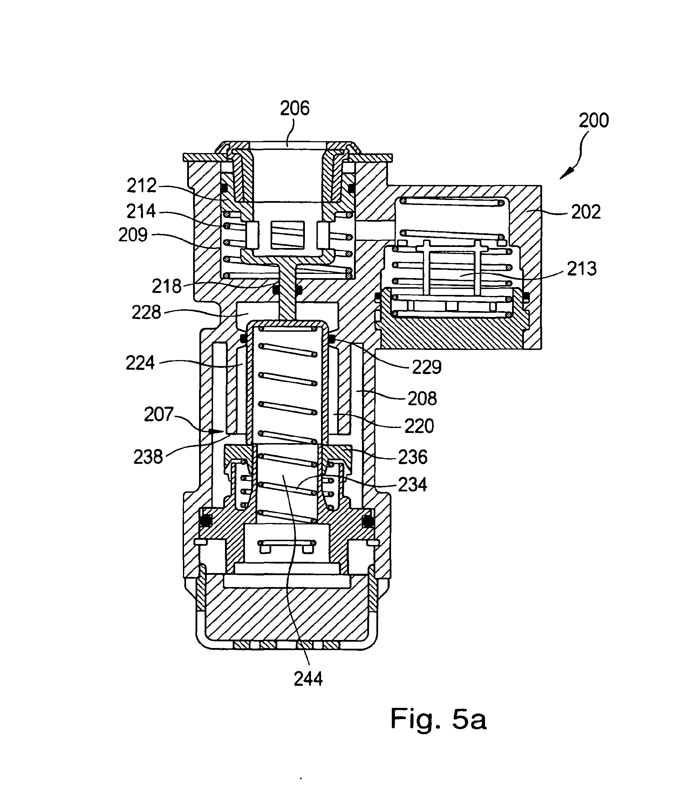

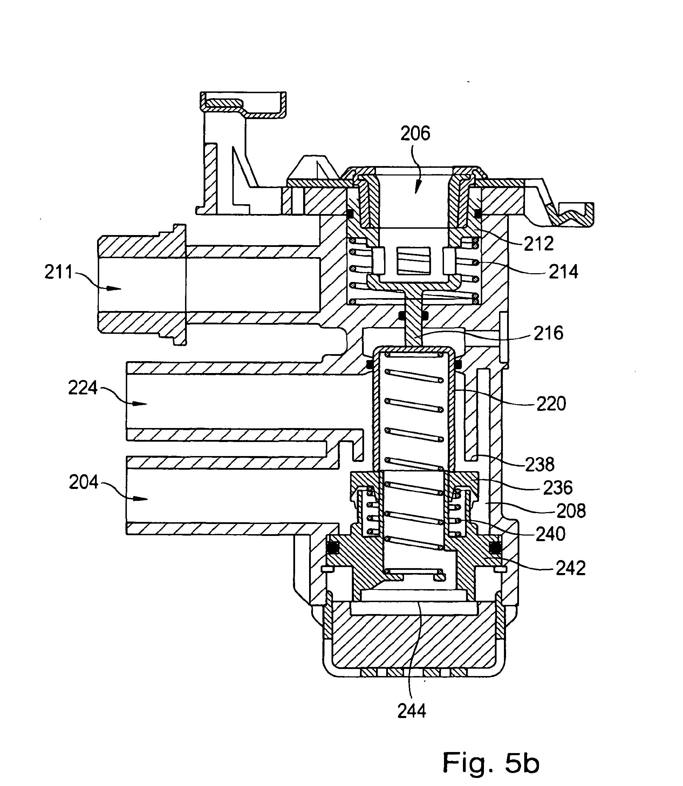

Figures 5a and 5b show the variant of Figures 3a to 3c and 4 in a coupled state. In this case, control piston 212 is pushed deeper into control bore 209 against the biasing force of control spring 214 and, consequently, moves supply piston 220 into the same direction against the force of supply spring 234. Accordingly, blocking element 236 is lifted from valve seat 238, so that fluid communication between supply outlet space 222 and supply inlet space 208 is established. At the same time, fluid communication between supply exhaust 244 and supply outlet space 222 via supply piston space 223 is blocked due to supply piston 220 abutting blocking element 236. Accordingly, fluid communication is established between supply inlet 204 and supply outlet 224. Pressurized air from the pulling vehicle may now fill the control line circuit of the trailer brake system via control inlet 206 and filter 213 and the supply line.

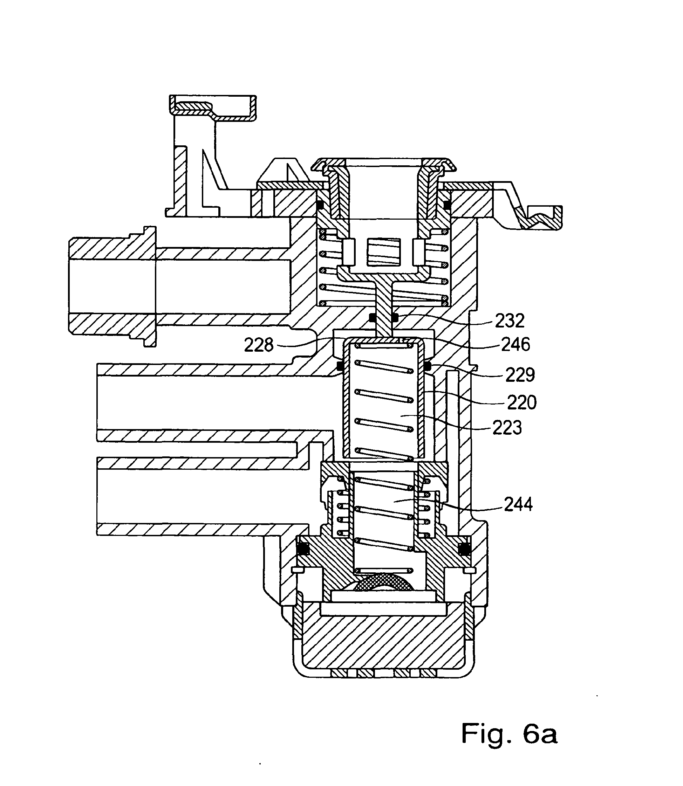

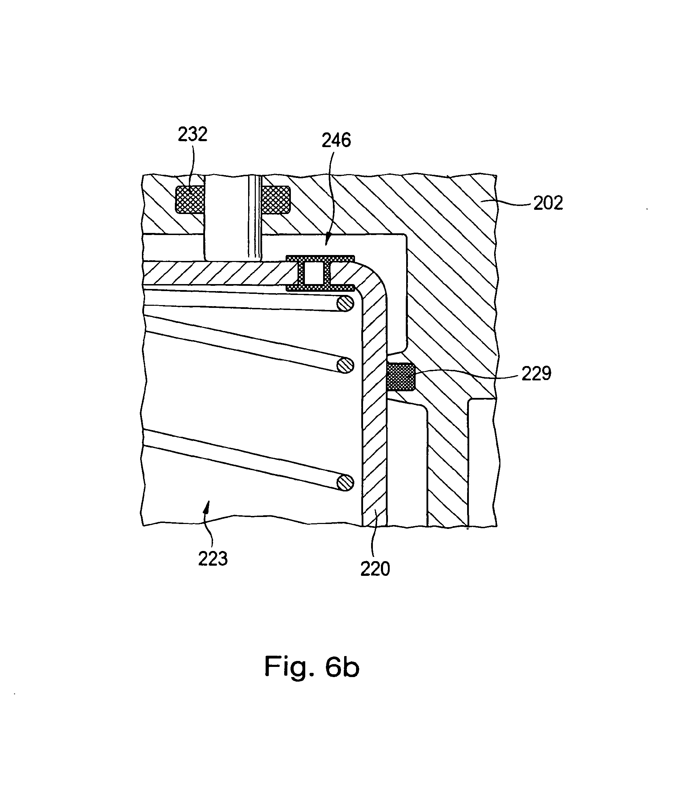

Figures 6a and 6b show a variant of the coupling head of figures 3a to 5b. It is in particular referred to figure 3c for reasons of comparison. According to the variant shown in figure 6a, exhaust space 228 arranged between supply seal 229 and control seal 232 is not exhausted via a separate exhaust 230 arranged in a wall of housing 202. Rather, there is provided an equalization port 246 adapted to provide fluid communication between equalization exhaust space 228 and supply piston space 223. In particular, equalization port 246 may be arranged in a wall, e.g., a top wall, of supply piston 220. Thus, fluid communication between equalization exhaust space 228 and supply exhaust 224 via supply piston space 223 is facilitated due to supply exhaust 244 being in fluid communication with supply piston space 223. Figure 6b shows an enlarged view of equalization port 246 arranged in support piston 220. Via equalization port 246, equalization space 228 may be in constant fluid communication with supply exhaust 244. Accordingly, movement of supply piston 220 leads to equalization of the pressure in equalization exhaust space 228 via equalization port 246, supply piston space 223 and supply exhaust 244. It should be noted that in this variant, the wall of housing 202 accommodating exhaust space 228 are closed and do not show a through-hole for exhausting exhaust space 228.

### List of Reference Numerals

- 10: Coupling head
- 12: Housing
- 13: Supply input line
- 14: Supply inlet
- 16: Control inlet
- 18: Supply inlet space
- 20: Supply outlet space
- 22: Blocking element
- 24: Spring
- 25: Valve seat
- 26: Piston
- 28: Piston space
- 29: Valve seat
- 30: Connection port
- 31: First seal
- 32: Second seal
- 33: Supply exhaust
- 34: Supply outlet
- 36: Supply line
- 38: Spring
- 40: Control inlet space
- 42: Control outlet
- 44: Control line

- 100: Coupling head
- 102: Housing
- 104: Supply inlet
- 105: Supply bore
- 106: Control inlet
- 107: Control bore
- 108: Supply inlet space
- 110: Control inlet space
- 112: Control piston
- 114: Control spring
- 116: Bore space
- 118: Bore line
- 120: Control bore space
- 122: Valve seat
- 124: Blocking element
- 126: Blocking spring
- 127: Holding element
- 128: Supply piston
- 130: Supply piston space
- 132: Intermediate element
- 133: Stop
- 134: Supply spring
- 136: Intermediate space
- 138: Supply outlet
- 140: Supply valve seat
- 142: Blocking element
- 144: Holding element
- 146: Exhaust space
- 148: Exhaust valve

- 200: Coupling head
- 202: Housing
- 204: Supply inlet
- 206: Control inlet
- 207: Supply bore
- 208: Supply inlet space
- 209: Control bore
- 210: Control inlet space
- 211: Control outlet
- 212: Control piston
- 213: Filter
- 214: Control spring
- 216: Piston rod
- 218: Piston rod bore
- 220: Supply piston
- 222: Supply outlet space
- 223: Supply piston space
- 224: Supply outlet
- 228: Exhaust space
- 229: Supply seal
- 230: Exhaust
- 232: Control seal
- 234: Supply spring
- 236: Blocking element
- 238: Valve seat
- 240: Blocking spring
- 242: Holding element
- 244: Supply exhaust
- 246: Equalization port

## Claims

1. Coupling head (10, 100, 200) for a trailer, the coupling head comprising:
a control inlet (16, 106. 206) connected or connectable to be in fluid communication with a control line (44) of the trailer;
a supply inlet (14, 104, 204) connected or connectable to a supply inlet line (13) providing a supply pressure;
a supply outlet (34, 138, 224) connected or connectable to be in fluid communication with a supply line (36) of the trailer;
the coupling head being arranged such that in an uncoupled state of the coupling head, the control line (44) is exhausted via the control inlet (16, 106. 206) and the supply line (36) is exhausted via a supply exhaust (32, 146, 244), the supply exhaust (32, 146, 244) being sealed against the control inlet (16, 106, 206).

2. Coupling head according to claim 1, further comprising a piston (26, 112, 212) operable to interrupt fluid communication between the supply exhaust and the supply line in the coupled state of the coupling head.

3. Coupling head according to claim 2, the piston (26, 112, 212) comprising a piston space (28) connected or connectable to be in fluid communication with the supply exhaust (32, 146).

4. Coupling head according to claim 2 or 3, the piston (26, 112, 212) being operable to open a valve seat (25, 122, 140, 238) to establish fluid communication between the supply inlet and the supply line.

5. Coupling head according to one of claims 2 to 4, the piston (26, 112, 212) comprising a valve seat (29) operable to seal a piston space (28) of the piston and/or the supply exhaust (32) against the supply inlet (18).

6. Coupling head according to one of the preceding claims, further comprising a first seal (31, 229) and a second seal (33, 232), the first and second seals (31, 33, 229, 232) sealing the control inlet (16, 206) against the supply outlet (34, 224).

7. Coupling head according to claim 6, wherein the supply exhaust (32, 146, 244) sealed or sealable against the supply outlet (34, 138, 224) by the first seal (31, 229) and is sealed against the control inlet (16, 106, 206) by the second seal (33, 232).

8. Coupling head according to claim 6 or 7, wherein the first seal (31, 229) is adapted to seal the supply exhaust (34, 146, 244) against a supply inlet space (18, 108, 208) in fluid communication with the supply inlet and/or a supply outlet space (20, 136, 222) in fluid communication with the supply outlet.

9. Coupling head according to one of the preceding claims, the supply inlet (14, 104, 204) being connected or connectable to a supply coupling head of the trailer.

10. Trailer for vehicle with a coupling head (10, 100, 200) according to one of claims 1 to 9.

## Patentansprüche

1. Kupplungskopf (10, 100, 200) für einen Fahrzeuganhänger, wobei der Kupplungskopf folgendes aufweist:
- einen Steuereingang (16, 106, 206), der so angeschlossen bzw. anschließbar ist, dass er mit einer Steuerleitung (44) des Fahrzeuganhängers in Strömungsmittelverbindung steht;
- einen Versorgungseingang (14, 104, 204), der mit einer Versorgungseingangsleitung (13) verbunden bzw. verbindbar ist, welche einen Versorgungsdruck liefert;
- einen Versorgungsausgang (34, 138, 224), der so angeschlossen bzw. anschließbar ist, dass er mit einer Versorgungsleitung (36) des Fahrzeuganhängers in Strömungsmittelverbindung steht;
wobei der Kupplungskopf in der Weise angeordnet ist, dass in einem nichtangekoppelten Zustand des Kupplungskopfes die Steuerleitung (44) über den Steuereingang (16, 106, 206) evakuiert wird und die Versorgungsleitung (36) über einen Versorgungsauslass (32, 146, 244) evakuiert wird, wobei der Versorgungsauslass (32, 146, 244) gegenüber dem Steuereingang (16, 106, 206) abgedichtet ist.

2. Kupplungskopf (20) nach Anspruch 1, welcher des Weiteren einen Kolben (26, 112, 212) aufweist, der so betätigbar ist, dass er die Strömungsmittelverbindung zwischen dem Versorgungsauslass und der Versorgungsleitung im angekoppelten Zustand des Kupplungskopfes unterbricht.

3. Kupplungskopf (20) nach Anspruch 2, bei welchem der Kolben (26, 112, 212) einen Kolbenraum (28) aufweist, der so verbunden bzw. verbindbar ist, dass er in Strömungsmittelverbindung mit dem Versorgungsauslass (32, 146) steht.

4. Kupplungskopf (20) nach Anspruch 2 oder 3, bei welchem der Kolben (26, 112, 212) so betätigbar ist, dass er einen Ventilsitz (25, 122, 140, 238) öffnet und damit eine Strömungsmittelverbindung zwischen dem Versorgungseingang und der Versorgungsleitung herstellt.

5. Kupplungskopf (20) nach einem der Ansprüche 2 bis 4, bei welchem der Kolben (26, 112, 212) einen Ventilsitz (29) aufweist, der so betätigbar ist, dass er einen Kolbenraum (28) des Kolbens und/oder den Versorgungsauslass (32) gegenüber dem Versorgungseingang (18) abdichtet.

6. Kupplungskopf (20) nach einem der vorhergehenden Ansprüche, welcher des Weiteren eine erste Dichtung (31, 229) und eine zweite Dichtung (33, 232) aufweist, wobei die erste und die zweite Dichtung (31, 33, 229, 232) den Steuereingang (16, 206) gegenüber dem Versorgungsausgang (34, 224) abdichten.

7. Kupplungskopf (20) nach Anspruch 6, bei welchem der Versorgungsauslass (32, 146, 244) gegen den Versorgungsausgang (34, 138, 224) durch die erste Dichtung (31, 229) abgedichtet bzw. abdichtbar ist und durch die zweite Dichtung (33, 232) gegen den Steuereingang (16, 106, 206) abgedichtet ist.

8. Kupplungskopf (20) nach Anspruch 6 oder 7, bei welchem die erste Dichtung (31, 229) so ausgelegt ist, dass sie den Versorgungsauslass (34, 146, 244) gegen einen Versorgungseingangsraum (18, 108, 208) abdichtet, der in Strömungsmittelverbindung mit dem Versorgungseingang steht, und/oder gegen einen Versorgungsausgangsraum (20, 136, 222), der in Strömungsmittelverbindung mit dem Versorgungsausgang steht.

9. Kupplungskopf (20) nach einem der vorhergehenden Ansprüche, bei welchem der Versorgungseingang (14, 104, 204) mit einem Versorgungskopplungskopf des Anhängers verbunden bzw. verbindbar ist.

10. Anhänger für ein Fahrzeug mit einem Kupplungskopf (10, 100, 200) nach einem der Ansprüche 1 bis 9.

## Revendications

1. Tête (10, 100, 200) d'attelage d'une remorque, la tête d'attelage comprenant :
une entrée (16, 106, 206) de commande reliée fluidiquement à une ligne (44) de commande de la remorque ou pouvant l'être ;
une entrée (14, 104, 204) d'alimentation reliée à une ligne (13) d'entrée d'alimentation fournissant une pression d'alimentation ou pouvant l'être ;
une sortie (34, 138, 224) d'alimentation reliée fluidiquement à une ligne (36) d'alimentation de la remorque ou pouvant l'être ;
la tête d'attelage étant agencée de manière à ce que, dans l'état non attelé de la tête d'attelage, la ligne (44) de commande soit vidée par l'intermédiaire de l'entrée (16, 106, 206) de commande et de manière à ce que la ligne (36) d'alimentation soit vidée par l'intermédiaire d'une évacuation (32, 146, 244) d'alimentation, l'évacuation (32, 146, 244) d'alimentation étant étanche vis-à-vis de l'entrée (16, 106, 206) de commande.

2. Tête d'attelage suivant la revendication 1, comprenant, en outre, un piston (26, 112, 212) pouvant fonctionner pour interrompre la communication fluidique entre l'évacuation d'alimentation et la ligne d'alimentation dans l'état attelé de la tête d'attelage.

3. Tête d'attelage suivant la revendication 2, le piston (26, 112, 212) comprenant un espace (28) de piston relié fluidiquement à l'évacuation (32, 146) d'alimentation ou pouvant l'être.

4. Tête d'attelage suivant la revendication 2 ou 3, le piston (26, 112, 212) pouvant fonctionner pour ouvrir un siège (25, 122, 140, 238) de vanne pour établir une communication fluidique entre l'entrée d'alimentation et la ligne d'alimentation.

5. Tête d'attelage suivant l'une des revendications 2 à 4, le piston (26, 112, 212) comprenant un siège (29) de vanne pouvant fonctionner pour rendre étanche un espace (28) du piston et/ou l'évacuation (32) d'alimentation vis-à-vis de l'entrée (18) d'alimentation.

6. Tête d'attelage suivant l'une des revendications précédentes, comprenant, en outre, un premier joint (31, 229) et un deuxième joint (32, 232), les premier et deuxième joints (31, 33, 229, 232) rendant l'entrée (16, 206) de commande étanche vis-à-vis de la sortie (34, 224) d'alimentation.

7. Tête d'attelage suivant la revendication 6, dans laquelle l'évacuation (32, 146, 244) d'alimentation est rendue étanche vis-à-vis de la sortie (34, 138, 224) d'alimentation ou peut l'être par le premier joint (31, 229) et rendue étanche vis-à-vis de l'entrée (16, 106, 206) de commande par le deuxième joint (33, 232).

8. Tête d'attelage suivant la revendication 6 ou 7, dans laquelle le premier joint (31, 229) est conçu pour rendre étanche l'évacuation (34, 146, 244) d'alimentation vis-à-vis d'un espace (18, 108, 208) d'entrée d'alimentation en communication fluidique avec l'entrée d'alimentation et/ou l'espace (20, 136, 222) de sortie d'alimentation en communication fluidique avec la sortie d'alimentation.

9. Tête d'attelage suivant l'une des revendications précédentes, l'entrée (14, 104, 204) d'alimentation étant reliée à une tête d'attelage d'alimentation de la remorque ou pouvant l'être.

10. Remorque de véhicule ayant une tête (10, 100, 200) d'attelage suivant l'une quelconque des revendications 1 à 9.
